# EUROPÄISCHE PATENTANMELDUNG

(11) **EP 1 826 556 A2**
(43) Veröffentlichungstag der Anmeldung: **29.08.2007**
(21) Anmeldenummer: 07102928.4
(22) Anmeldetag: 22.02.2007
(51) Int. Cl.: G01N 21/90

(54) **Prüfeinrichtung**

(30) Priorität: 22.02.2006 DE 102006008552
(71) Anmelder: Kappner, Helmut A., 67346 Speyer (DE)
(72) Erfinder: Kappner, Helmut A., 67346 Speyer (DE)
(74) Vertreter: Thews, Karl

(57) **Zusammenfassung**

Die Erfindung bezieht sich auf eine Prüfeinrichtung 1 für Werkstücke 2 mit mindestens einer ein Objektiv 3.1 aufweisenden Kamera 3 sowie mindestens einem mit Bezug zum Strahlengang vor dem Objektiv 3.1 angeordneten Umlenkspiegel 4, der das von einem vor dem Objektiv 3.1 platzierbaren Werkstück emittierte Licht in eine Richtung zur Kamera 3 reflektiert, wobei der Umlenkspiegel 4 als Ringspiegel mit einer Mittelachse 4.1 ausgebildet ist und eine kegelmantelförmige oder teilsphärische Reflexionsfläche 4.2 aufweist.

## Beschreibung

Die Erfindung bezieht sich auf eine Prüfeinrichtung für Werkstücke mit mindestens einer ein Objektiv aufweisenden elektronischen Kamera, deren optische Achse koaxial zu einer Symmetrie- bzw. Mittelachse des Werkstücks ausrichtbar ist, sowie mindestens einem im Strahlengang vor dem Objektiv angeordneten Umlenkspiegel, der das von dem vor dem Objektiv nahezu koaxial platzierbaren, vorzugsweise rotationssymmetrischen Werkstück emittierte Licht in eine Richtung zur Kamera reflektiert, wobei der Umlenkspiegel als Hohl- bzw. Ringspiegel mit einer koaxial zur optischen Achse des Objektivs angeordneten Mittelachse ausgebildet ist und eine kegelmantelförmige Reflexionsfläche aufweist und neben dem vom Umlenkspiegel direkt zum Objektiv reflektierten Bildanteil auch das von dem Werkstück emittierte Licht und der zugehörige Bildanteil zumindest teilweise direkt von der Kamera erfassbar ist.

Die Erfindung bezieht sich ferner auf eine Prüfeinrichtung für Werkstücke mit mindestens einer Kamera und einem im Strahlengang vor der Kamera angeordneten Objektiv mit einer Frontlinse, die einen Durchmesser D_{F} aufweist, wobei im Strahlengang vor dem Objektiv, also zwischen Objektiv und Werkstück mindestens eine den Strahlengang aufweitende Streulinse mit einem Außendurchmesser D_{L} konzentrisch zum Objektiv angeordnet ist.

Die Erfindung bezieht sich auch auf eine Prüfeinrichtung für Werkstücke mit mindestens einer Kamera und einem im Strahlengang vor der Kamera angeordneten Objektiv mit einem Durchmesser Dₒ, sowie mindestens einer im Strahlengang vor dem Objektiv, also zwischen Objektiv und Werkstück angeordneten ringförmigen Sammellinse mit einem Ablenkwinkel δ, einem Innendurchmesser Dᵢ und einem Außendurchmesser D_{L}.

Die erfindungsgemäße Prüfeinrichtung gewährleistet die Prüfung zylindrischer oder annäherungsweise zylindrischer Hohlkörper. Sie ist vorzugsweise mit einer einzigen elektronischen Kamera ausgestattet, deren optische Achse mit der Symmetrieachse des Werkstücks bzw. zylindrischen Hohlkörpers zumindest näherungsweise koaxial aurichtbar ist. In Verbindung mit der erfindungsgemäßen optischen Einrichtung ist die simultane Erfassung eines Teilbereichs des Hohlkörpers unter zwei unterschiedlichen Blickrichtungen bzw. Perspektiven, insbesondere in einer Richtung lotrecht oder normal zur Aufstandsfläche des Werkstücks gewährleistet.

Dabei werden mehrere Teilbereiche der Hohlkörper-Oberfläche, also sowohl der Boden, der innere Wandbereich und der Rand und ggf. mindestens ein Teil der äußeren Mantelfläche simultan aus mehreren Perspektiven erfasst, die erzeugten Bilder an ein mit der Kamera verbundenes Bildverarbeitungssystem weitergegeben sowie von diesem Bildverarbeitungssystem die aus mindestens zwei unterschiedlichen Perspektiven sich ergebenden Teilbereiche des Kamerabildes ausgewertet.

Es sind bereits Prüfeinrichtungen bekannt, die z. B. die Mantelfläche zylindrischer Gegenstände ringsum in einem Kamerabild sichtbar machen, indem die Kamera mit ihrer optischen Achse koaxial zu der Symmetrieachse des Gegenstands angeordnet ist und über einen Ringspiegel auf die Mantelfläche des Gegenstands blickt. Solche Einrichtungen dienen z. B. der Prüfung von Beschriftungen auf der Mantelfläche von Zylindern oder der Gewindeprüfung von Schrauben. Dabei bedienen sich diese Einrichtungen lediglich des optischen Strahlengangs, der über den Hohlringspiegel geleitet wird.

Es sind auch Einrichtungen bekannt, die zylindrische Hohlkörper (Flaschenverschlüsse aus Kunststoff) aus zwei unterschiedlichen Perspektiven aufnehmen, dabei jedoch mit zwei Kameras arbeiten, wobei eine der Kameras mit einem telezentrischen und die andere Kamera mit einem Weitwinkel-Objektiv versehen ist. Auf diese Weise kann im Innenbereich des Hohlkörpers mittels des Weitwinkel-Objektivs sowohl der Boden als auch die zylindrische Seitenwand innen geprüft werden, mittels der Kamera mit dem telezentrischen Objektiv können die Stirnfläche und überstehende Teile der Mantelfläche innen und außen erfasst werden.

Aus der DE 94 15 769 U1 ist eine Vorrichtung zur Überprüfung von Flaschen auf Beschädigungen bekannt, die einen positiven Bildaufnehmer und eine Linse aufweist, welche den Teil der zu untersuchenden Flasche, welcher sich im direkten Strahlgang der Linse befindet, auf dem Bildaufnehmer abbildet, wobei eine Spiegelanordnung vorgesehen ist, die Teile der Flasche, die sich nicht im direkten Strahlengang der Linse befinden, zusätzlich zu den im direkten Strahlengang der Linse befindlichen Teile der Flasche auf den Bildaufnehmer abbildet. Die Spiegelanordnung besteht dabei aus zwei Ringspiegeln unterschiedlichen Durchmessers, wobei die beiden Ringspiegel konzentrisch um die optische Achse der Linse angeordnet sind. Damit der direkte Strahlengang der Linse zugänglich ist, sind die Durchmesser der Ringspiegel größer als der Durchmesser der Flasche bzw. des zu erfassenden Flaschenkopfes.

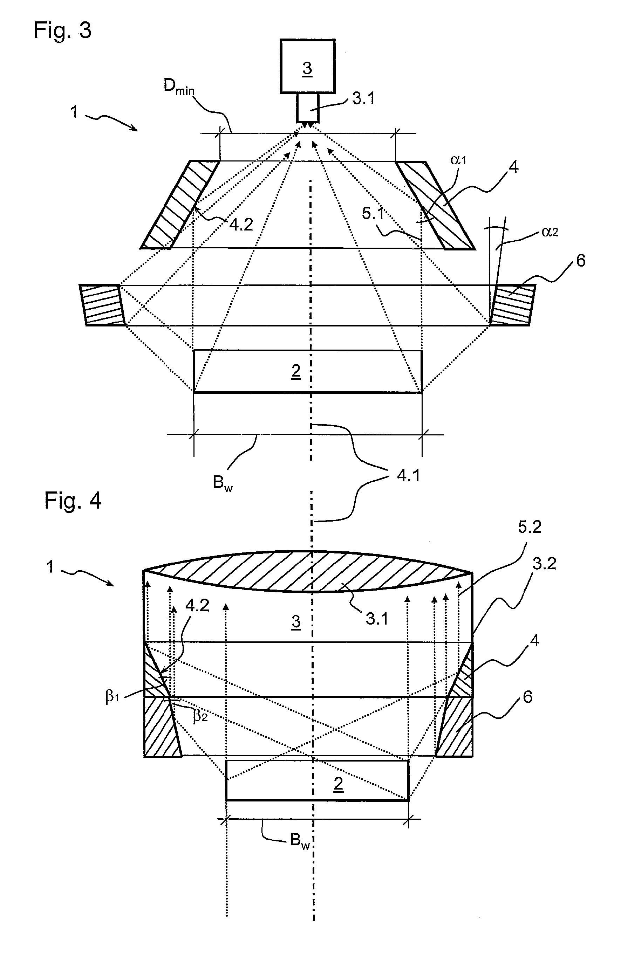

Die DE 31 19 688 C2 beschreibt eine Vorrichtung zur Überprüfung eines Objekts auf etwaige Unregelmäßigkeiten, Fehler oder dergleichen, die einen elektrischen Wandler mit einem lichtelektrischen Schirm und einer Anordnung optischer Linsen aufweist, die gleichzeitig Bilder von wenigstens zwei unterschiedlichen Bereichen des Objekts auf dem lichtelektrischen Schirm fokussieren. Daneben weist die Vorrichtung eine Auswerteeinrichtung auf, der das elektrische Signal des lichtelektrischen Wandlers zugeführt wird und die feststellt, ob das Objekt Unregelmäßigkeiten, Fehler oder dergleichen aufweist. Die vorgesehenen Linsen, deren optische Achsen zusammenfallen, weisen eine unterschiedliche Brennweite auf und fokussieren auf dem lichtelektrischen Schirm Bilder von Objektbereichen, die einen unterschiedlichen Abstand von dem lichtelektrischen Wandler aufweisen. Die Vorrichtung kann dabei gemäß Anspruch 2 eine scheibenförmige und eine ringförmige Sammellinse (Fig. 3) sowie gemäß Anspruch 3 eine scheibenförmige Sammellinse und eine ringförmige Streulinse (Fig. 4) enthalten.

Eine telezentrische Ansicht, insbesondere des Randbereichs des zu prüfenden Objekts in einer Richtung lotrecht zu einer Seitenwand des Objekts außen und innen an dieser Seitenwand vorbei sowie gleichzeitig die Ansicht der inneren Seitenwand, ist mit den bekannten Vorrichtungen nicht möglich.

Der Erfindung liegt die Aufgabe zugrunde, eine Prüfeinrichtung derart auszubilden und anzuordnen, dass mit einfachen Mitteln die Auswertung von mehreren Teilbereichen eines Gegenstands unter optimalen Blickrichtungen gewährleistet ist.

Gelöst wird die Aufgabe erfindungsgemäß durch die Merkmale der nebengeordneten Ansprüche 1, 2, 6, 13, und 16.

Die erste Lösung wird dadurch erreicht, dass der Ringspiegel oder die Reflexionsfläche einen minimalen Durchmesser Dₘᵢₙ und einen maximalen Durchmesser Dₘₐₓ aufweist, wobei Dₘᵢₙ maximal so groß ist wie die Werkstückbreite B_{w} und das Werkstück koaxial zum Ringspiegel platzierbar ist. Hierdurch wird bei Einsatz eines Weitwinkelobjektivs über den einen Ringspiegel das Werkstück, insbesondere ein Rand des Werkstücks aus einer Richtung lotrecht zu einer Aufstandsfläche des Werkstücks unmittelbar erfasst. In der Praxis ist der Ringspiegel bzw. seine Reflexionsfläche etwas breiter, so dass Schwankungen betreffend die Platzierung des Werkstücks zentral unterhalb des Ringspiegels eine optimale Messung nicht verhindern. Der Ringspiegel reflektiert das vom Werkstück in lotrechter Richtung ausgehende Licht unmittelbar zum Objektiv bzw. zur Linse. Der minimale Durchmesser Dₘᵢₙ des Ringspiegels bzw. der Reflexionsfläche darf dabei auch nicht größer sein als die Werkstückbreite bzw. dessen Durchmesser (vorzugsweise kleiner), da sonst die Erfassung vorgenannter Randbereiche des Werkstücks in einer Richtung lotrecht zu einer Aufstandsfläche des Werkstücks nicht gewährleistet wäre. Wird der innere Durchmesser Dₘᵢₙ des Ringspiegels verkleinert, so sind auch Details im inneren Bereich einer Bodeninnenfläche des als Flaschenkappe ausgebildeten Werkstücks annähernd telezentrisch zu sehen, was z. B. für die Prüfung von eingelassenen Dichtringen bei Flaschenverschlüssen sehr vorteilhaft ist.

Somit ist gewährleistet, dass insbesondere der Rand des jeweiligen Werkstücks in einer Richtung lotrecht zu einer Aufstandsfläche des Werkstücks erfasst wird. Die kegelmantelförmige Ausbildung der Reflexionsfläche gewährleistet ein von Höhenschwankungen relativ unabhängiges und nahezu verzerrungsfreies Abbild vorgenannter Randbereiche des Werkstücks, insbesondere zur hochgenauen Durchmesserprüfung des jeweils vorhandenen Werkstücks. Aufgrund der Weitwinkligkeit ist ebenso die Prüfung der zirkumferenziellen inneren Mantelfläche auf Material-Ausbrüche des Werkstücks gewährleistet. Darüber hinaus kann neben dem stirnseitigen Rand und der innen liegenden Mantelfläche der komplette Innenbereich des Hohlkörpers, z. B. eines Flaschenverschlusses, optisch erfasst werden. Von Bedeutung ist es, dass die Kamera zusätzlich in einem kreisflächenförmigen Bildausschnitt in dem vom vorzugsweise symmetrischen Ringspiegel freigelassenen Innenbereich direkt auf das vorzugsweise rotationssymmetrische Werkstück blickt und dass die Kamera an ein Bildverarbeitungssystem angeschlossen ist und dieses sowohl Merkmale des Werkstücks im kreisflächenförmigen Bildausschnitt im Innenbereich als auch Merkmale des Werkstücks im optischen Bereich des Ringspiegels auswertet.

Dabei werden mehrere Teilbereiche, der Rand und der innere Wandbereich der Werkstück-Oberfläche simultan aus verschiedenen Perspektiven, insbesondere einer Lotrechten erfasst, die erzeugten Bilder an ein mit der Kamera verbundenes Bildverarbeitungssystem weitergegeben sowie von diesem Bildverarbeitungssystem die aus mindestens zwei unterschiedlichen Perspektiven sich ergebenden Teilbereiche des Kamerabildes ausgewertet.

Gelöst wird die Aufgabe auch zum einen dadurch, dass im Strahlengang vor dem Objektiv eine Sammellinse mit einem Durchmesser D_{L} vorgesehen ist, wobei der Durchmesser D_{L} mindestens so groß ist wie die Werkstückbreite B_{w}, wobei der Neigungswinkel **α**1 des Ringspiegels derart ausgebildet ist, dass über die Kamera ein Rand und/oder innerer Wandbereich des als Hohlkörper ausgebildeten Werkstücks erfassbar ist. Zum anderen wird die Aufgabe dadurch gelöst, dass das Objektiv als telezentrisches Objektiv mit einem Durchmesser Dₒ ausgebildet ist, wobei der Durchmesser Dₒ größer ist als die Werkstückbreite B_{w} und der Durchmesser Dₒ des Objektivs größer ist als der minimale Durchmesser Dₘᵢₙ des Ringspiegels. Dadurch wird erreicht, dass unter Einsatz der oberhalb des Werkstücks angeordneten Sammellinse oder des oberhalb des Werkstücks angeordneten telezentrischen Objektivs, welche das Werkstück lotrecht von oben erfassen in Verbindung mit dem einen Ringspiegel der den Rand bzw. die inneren Randbereiche erfasst, ebenfalls die vorstehend genannte erfindungsgemäßen Perspektiven gewährleistet sind. Der Ringspiegel reflektiert das vom Werkstück ausgehende Licht unmittelbar zum Objektiv bzw. zur Linse.

Gelöst wird die Aufgabe auch, dadurch dass das Objektiv als telezentrisches Objektiv ausgebildet ist und der Durchmesser D_{F} der Frontlinse des telezentrischen Objektivs größer ist als eine zu erfassende Werkstückbreite B_{w} und der Durchmesser D_{L} der Streulinse kleiner ist als der Durchmesser D_{F} der Frontlinse. Durch den Einsatz eines telezentrischen Objektivs mit ausreichend großem Durchmesser D_{F} und einer kleineren Streulinse wird neben dem kompletten Innenbereich des Hohlkörpers inklusive der innenliegenden Mantelfläche auch der stirnseitige Rand z. B. eines Flaschenverschlusses aus einer Richtung lotrecht zur Aufstandsfläche erfasst. Vorteilhaft ist es hierbei, dass das Objektiv alternativ auch als endozentrisches Objektiv mit einem Öffnungswinkel γ ausgebildet ist, wobei der Öffnungswinkel γ maximal 10° groß ist. Die Streulinse erzeugt im mittleren Bildbereich eine weitsichtige Abbildung des gesamten Innenbereichs des Hohlkörpers, in vorteilhafter Weise auch des oberen Randes in einem Sichtwinkel der eine sichere Erkennung von Einbrüchen am Rand zulässt.

Zudem wird die Aufgabe dadurch gelöst, dass das Objektiv als weitwinkliges Objektiv mit einem Öffnungswinkel γ von mindestens 30° bis 90°ausgebildet ist, wobei der Außendurchmesser D_{L} der Sammellinse mindestens so groß ist wie die Werkstückbreite B_{w} und der Ablenkwinkel δ dem Öffnungswinkel γ entspricht. Letztlich wird durch den Einsatz einer ringförmigen Sammellinse und eines Weitwinkelobjektivs ebenfalls die Erfassung des stirnseitigen Randes direkt in der Draufsicht und gleichzeitig eine umfassende Innenansicht inklusive eines inneren Wandbereichs über die Direktansicht gewährleistet. Wenn der Ablenkwinkel δ der Sammellinse dem Öffnungswinkel γ des Objektivs entspricht, so ist ein lotrechte Draufsicht gewährleistet. Die Brennweite der Sammellinse ist dabei derart gewählt, dass das Werkstück aus einer Richtung lotrecht zur Aufstandsfläche erfasst wird. Durch Anpassung der Brennweite an den Öffnungswinkel des Objektivs ist eine telezentrische bzw. lotrechte Ansicht gewährleistet.

Insbesondere bei der Prüfung von Flaschenverschlüssen, bei der einerseits eine verzerrungsfreie Abbildung verschiedener Teilbereiche wie insbesondere den Rand und die innere Bodenfläche und andererseits weitere Ansichten vorteilhaft sind, ergibt sich erfindungsgemäß ein äußerst kompakter Prüfaufbau, der den Erfordernissen des Platz sparenden und ökonomischen Prüfmaschinenbaus entgegenkommt. Zudem vereinfacht sich dadurch der Aufwand für Elektronik und Software erheblich.

Vorteilhaft ist es in diesem Zusammenhang, dass die Reflexionsfläche teilweise gekrümmt oder sphärisch ausgebildet ist, so dass z. B. eine Invertierung des Bildaufbaus und/oder eine eindimensionale Verkleinerung bzw. Stauchung oder Vergrößerung bzw. Streckung möglich sind.

Eine zusätzliche Möglichkeit ist gemäß einer Weiterbildung, dass das Objektiv als Weitwinkel- oder als Weitwinkel-Nadelöhrobjektiv ausgebildet ist. Durch Einsatz eines vorgenannten Weitwinkel- oder Weitwinkel-Nadelöhrobjektivs ist zunächst im direkten Strahlengang der Optik durch den freien Innenbereich des Ringspiegels hindurch der gesamte Innenbereich des Hohlkörpers mit Bodenfläche und der inneren Mantelfläche erfassbar. Neben der Erfassung vorgenannter Bereiche kann jedoch zusätzlich das Werkstück über den Ringspiegel in weiteren Blickrichtungen, insbesondere aus der lotrechten Richtung, erfasst werden. Zudem kann neben der Erfassung vorgenannter Randbereiche zusätzlich das Werkstück von der der Kamera zugewandten Seite erfasst und ausgewertet werden. Der Ringspiegel gewährleistet dabei aufgrund seiner Öffnung den direkten Strahlengang zwischen der Kamera und dem Werkstück einerseits sowie die Erfassung eines koaxial zur Mittelachse verlaufenden, vom Randbereich des Werkstücks ausgehenden lotrechten bzw. zylinderförmigen Strahlengangs, der über die Reflexionsfläche zur Kamera hin abgelenkt wird. Somit ist mindestens ein von dem Werkstück emittierbarer, koaxial zur Mittelachse verlaufender erster Strahlengang durch den Ringspiegel zur Kamera hin reflektierbar. Insbesondere bei kegelmantelförmigen Ringspiegeln einerseits sowie runden Werkstücken andererseits besitzt dieser Strahlengang eine zylinderförmige Ausgangsform.

Dabei ist es vorteilhaft, dass der Neigungswinkel des Ringspiegels derart ausgebildet ist, dass die Blickrichtung der Kamera über den Ringspiegel lotrecht auf den Randbereich des als Hohlkörper ausgebildeten Werkstücks und an diesem streifend innen und außen vorbei erfolgt. Diese Ausführung der erfindungsgemäßen Einrichtung ist vor allem dann vorteilhaft, wenn Materialüberstände an der Mantelfläche innen oder außen geprüft werden sollen. Zusätzlich ergibt sich der Vorteil, dass der Durchmesser des Hohlkörpers mit dieser annäherungsweise telezentrischen Sicht auf den Rand unabhängig von Höhenschwankungen und Positionstoleranzen des Prüflings präzise ermittelt werden kann.

Ferner ist es vorteilhaft, dass das Objektiv als telezentrisches Objektiv mit einem Durchmesser Dₒ ausgebildet ist, wobei der Durchmesser Dₒ größer ist als die Werkstückbreite B_{w} und der Durchmesser Dₒ des Objektivs größer ist als der minimale Durchmesser Dₘᵢₙ des Ringspiegels. Das telezentrische Objektiv ist damit zwar größer ausgebildet als vorgenanntes Weitwinkel-Nadelöhrobjektiv bzw. Weitwinkelobjektiv, jedoch ist somit eine umfängliche Erfassung des Werkstücks aus einer Richtung normal zur Aufstandsfläche gewährleistet. Durch Einsatz eines vorgenannten telezentrischen Objektives ist zunächst im direkten Strahlengang der Optik durch den freien Innenbereich des Ringspiegels hindurch die Bodenfläche des Hohlkörpers erfassbar. Zusätzlich kann im direkten Strahlengang der obere Rand des Hohlkörpers erfasst werden. Zudem kann neben der Erfassung vorgenannter Bereiche zusätzlich die Innenseite der Mantelfläche des Werkstücks im Strahlengang, der über den Ringspiegel verläuft, geprüft werden. Dabei ist es in vorteilhafter Weise vorgesehen, dass der Durchmesser Dₒ des Objektivs größer ist als der minimale Durchmesser Dₘᵢₙ des Ringspiegels. Im Gegensatz zum vorgenannten Einsatz eines Weitwinkelobjektivs wird die Erfassung der inneren Mantelfläche sowie der Rand über die optische Umlenkung des Ringspiegels gewährleistet. Ein vom Werkstück emittierter Strahlengang, der vom Ringspiegel in einer Richtung koaxial zur Mittelachse reflektiert wird, kann vom Objektiv erfasst werden. Nur wenn eben mindestens ein zweiter Strahlengang des vom Werkstück emittierbaren Lichts durch den Ringspiegel in eine Richtung koaxial zur Mittelachse reflektierbar ist, kann das Werkstück auch aus einer seitlichen Richtung über das Objektiv erfasst werden.

In dieser Ausführung der erfindungsgemäßen Vorrichtung ist im Zusammenhang mit der Verwendung eines telezentrischen Objektivs die gesamte Erfassung des Werkstücks aus einer Richtung lotrecht zur Aufstandsfläche des Werkstücks gewährleistet, da eine Teilabdeckung des Werkstücks durch den Ringspiegel verhindert ist. Wird der innere Durchmesser des Ringspiegels Dₘᵢₙ verkleinert, so sind auch Details im äußeren Bereich einer Bodeninnenfläche des als Flaschenkappe ausgebildeten Werkstücks annähernd telezentrisch zu sehen. Daneben ist gewährleistet, dass über den Ringspiegel die vorgenannten Außenbereiche des Werkstücks aus einer Richtung lotrecht zu einer Aufstandsfläche des Werkstücks erfasst werden können. In der Praxis ist der Ringspiegel bzw. seine Reflexionsfläche etwas breiter, so dass Schwankungen betreffend die Platzierung des Werkstücks zentral unterhalb des Ringspiegels eine optimale Messung nicht verhindern.

Zudem ist es vorteilhaft, dass ein zweiter Ringspiegel mit einem Neigungswinkel α2, β2 vorgesehen ist, der im Strahlengang vor dem ersten Ringspiegel, also zwischen dem ersten Ringspiegel und dem Werkstück angeordnet ist. Es sind also zwei Ringspiegel mit unterschiedlichen Neigungswinkeln α1, α2 bzw. β1, β2 vorgesehen. Beide Ringspiegel reflektieren das vom Werkstück ausgehende Licht jeweils unmittelbar zum Objektiv bzw. zur Linse. Die erfindungsgemäße Prüfeinrichtung mit zwei Hohl- bzw. Ringspiegeln erlaubt nicht nur die komplette Prüfung des inneren Wandbereichs und des Randes sowie die Prüfung überstehender Teile der Mantelfläche innen und außen, sondern auch die teilweise oder vollständige Prüfung des äußeren Wandbereichs.

Hierzu ist es vorteilhaft, dass der Neigungswinkel α2, β2 des zweiten Ringspiegels derart ausgebildet ist, dass die Blickrichtung der Kamera über den Ringspiegel seitlich auf die äußere Mantelfläche des Hohlkörpers ausrichtbar ist. Dies erspart in vielen Fällen den Einsatz mehrerer Kameras von außen. Der zweite Ringspiegel weist dabei vorzugsweise einen größeren Durchmesser auf.

Von besonderer Bedeutung ist für die vorliegende Erfindung, dass das telezentrische Objektiv ein Gehäuse aufweist und der Ringspiegel zumindest teilweise innerhalb des Gehäuses angeordnet ist. Das telezentrische Objektiv ist somit zusammen mit dem Ringspiegel justierbar und entsprechend der Positionierung des Werkstücks als Einheit ausrichtbar.

Vorteilhaft ist es auch, dass die Kamera an Stelle eine telezentrischen Objektivs ein endozentrisches Teleobjektiv mit großer Brennweite bzw. kleinem Öffnungswinkel γ aufweist, wobei zwecks Anpassung des Abstands zwischen dem Objektiv und dem Werkstück und zur Gewährleistung einer geringen Bauhöhe der Einrichtung der Strahlengang zwischen dem Objektiv und dem Werkstück über mindestens zwei Umlenkspiegel umgelenkt wird. Normale Objektive haben im Gegensatz zu telezentrischen Objektiven eine größere Brennweite und eine größere Schärfentiefe. Der optische Weg des Strahlengangs eines normalen Objektivs mit kleinem Öffnungswinkel wird über eine zweifache Umlenkung verlängert, so dass ein der Brennweite entsprechender Abstand zum Werkstück trotz geringer Bauhöhe gewährleistet ist. Da das Objektiv mit großer Brennweite bezüglich der Höhenunabhängigkeit der Durchmesser- und anderen Messungen dem telezentrischen Objektiv nahe kommt, jedoch in Bezug auf die Schärfentiefe diesem überlegen ist, ist eine optimale Erfassung des Werkstücks gewährleistet.

Als weiterer erheblicher Vorteil fällt der vergrößerte Freiraum oberhalb des Werkstückes ins Gewicht, der für den Beleuchtungseinbau mehr Freiheitsgrade erlaubt.

Im Zusammenhang mit der erfindungsgemäßen Ausbildung und Anordnung ist es von Vorteil, dass die Kamera und/oder der Ringspiegel in eine Richtung parallel zur Mittelachse verschiebbar ist. Die Verschiebung des Ringspiegels bzw. der Kamera gewährleistet eine Flexibilität betreffend die Richtung der erfassbaren Bildbereiche des Werkstücks, insbesondere bei Werkstücken mit tiefen Ausnehmungen.

Hierzu ist es vorteilhaft, dass zwecks Lagerung der Streulinse eine durchsichtige Platte im Strahlengang zwischen der Streulinse und dem Werkstück vorgesehen ist, auf der die Streulinse ablegbar ist. Die Streulinse kann somit einfach gelagert und ggf. bezüglich ihrer Lage in horizontaler Richtung justiert bzw. bewegt werden.

Daneben ist es vorteilhaft, dass der Innendurchmesser Dᵢ der ringförmigen Sammellinse kleiner ist als die zu erfassende Werkstückbreite B_{w}. Somit kann über die Sammellinse der Randbereich des Werkstücks bzw. des zu erfassenden Teilausschnitts des Werkstücks erfasst werden. Die Innenseite des Werkstücks wird über das Objektiv direkt erfasst.

Dabei ist es von Vorteil, dass die Sammellinse als Fresnellinse ausgebildet ist und aus Glas oder Kunststoff gebildet ist. Die Kunststoffvariante ist relativ preiswert, wohingegen die Glasvariante präziser und verschleißfester ist.

Von Vorteil ist es dabei auch, dass der Innendurchmesser Dᵢ der Sammellinse größer ist als der Durchmesser D_{L} der Frontlinse des Objektivs oder der Durchmesser Dₒ des Objektivs. Somit ist ausreichend Platz für die Erfassung des Innenbereichs des Werkstücks gegeben. Daneben kann neben dem Randbereich die Außenseite des Werkstücks streifend erfasst werden.

In diesem Zusammenhang ist es vorteilhaft, dass im Strahlengang zwischen dem Objektiv und dem Werkstück mindestens eine ringförmige Sammellinse und mindestens eine Streulinse wie vorstehend beschrieben angeordnet sind, wobei die Streulinse konzentrisch zur Sammellinse angeordnet ist und die Breite B_{S} der Sammellinse mindestens so groß ist wie der Durchmesser D_{F} der Frontlinse oder wie der Durchmesser Dₒ des Objektivs. Die Frontlinse bzw. das Objektiv sind damit vollständig abgedeckt, so dass der Bildbereich vollständig ausgeschöpft werden kann.

Die Kombination von Streulinse und ringförmiger Sammellinse gewährleistet bei Einsatz eines Objektives mittleren Öffnungswinkels sowohl eine ausreichende Aufweitung für die Erfassung des Innenbereichs als auch eine entsprechende Sammlung bzw. Brechung für die Erfassung des Randbereichs bzw. der Außenfläche.

Weitere Vorteile und Einzelheiten der Erfindung sind in den Patentansprüchen und in der Beschreibung erläutert und in den Figuren dargestellt. Dabei zeigen:
- Figur 1: eine Prinzipdarstellung eines Weitwinkelobjektivs mit Ringspiegel und Werkstück;
- Figur 2: eine Prinzipdarstellung eines telezentrischen Objektivs mit Ringspiegel und Werkstück;
- Figur 3: eine Prinzipdarstellung nach Figur 1 mit einem zweiten Ringspiegel;
- Figur 4: eine Prinzipdarstellung nach Figur 2 mit einem zweiten Ringspiegel;
- Figur 5: eine Prinzipdarstellung nach Figur 3 mit Sammellinse;
- Figur 6: ein Umlenkgehäuse mit zwei Umlenkspiegeln;
- Figur 7: eine Prinzipdarstellung mit telezentrischem Objektiv und Streulinse;
- Figur 8: eine Prinzipdarstellung mit Weitwinkelobjektiv und ringförmiger Sammellinse;
- Figur 9: eine Prinzipdarstellung mit Streulinse und Sammellinse;
- Figur 10: eine Prinzipdarstellung der Ansicht des Werkstücks.

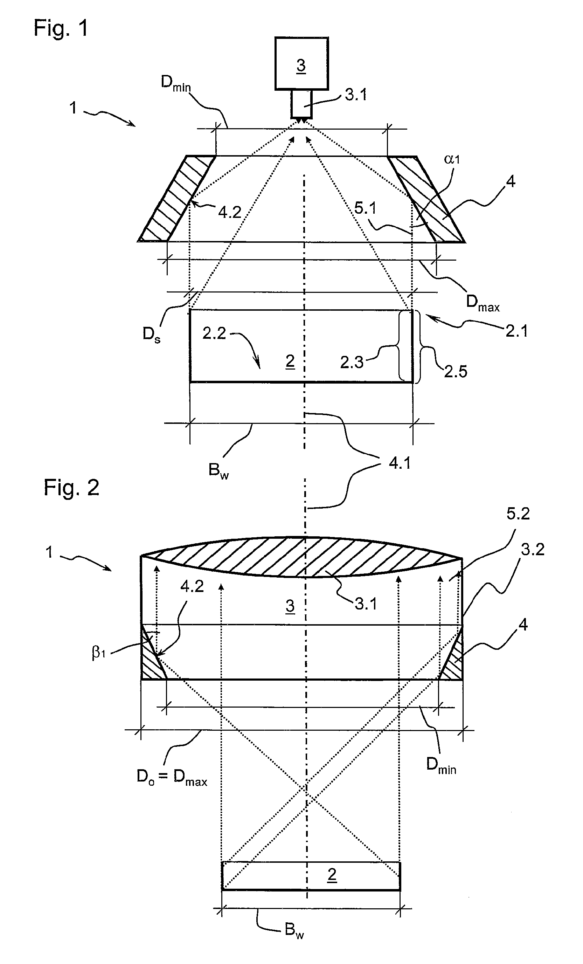

Eine Prüfeinrichtung 1 gemäß Figur 1 weist eine Kamera 3 mit einem Weitwinkelobjektiv 3.1 sowie einem mit Rücksicht auf den Strahlengang davor angeordneten Hohl- bzw. Ringspiegel 4 auf. Der Ringspiegel 4 ist dabei vor dem Objektiv 3.1, vorzugsweise unterhalb des Objektivs 3.1 angeordnet und weist einen Reflexionsflächenwinkel bzw. Mitten-Reflexionswinkel α₁ auf. Vor bzw. unterhalb des Ringspiegels 4 wiederum ist ein zu prüfendes Werkstück 2 vorgesehen. Das Werkstück 2 wird dabei in der Praxis über eine hier nicht dargestellte Fördereinrichtung an der so gebildeten Prüfeinrichtung 1 vorbeigeführt. Der Ringspiegel 4 weist dabei eine teilkegelförmige Reflexionsfläche 4.2 auf, die einen Mindestdurchmesser Dₘᵢₙ sowie einen Maximaldurchmesser Dₘₐₓ besitzt. In einem nicht dargestellten Ausführungsbeispiel ist diese Reflexionsfläche 4.2 neben der kegelmantelförmigen Grundform konvex bzw. konkav ausgebildet, so dass sich im Ganzen eine teilsphärische Reflexionsfläche 4.2 ergibt.

Das vom Werkstück 2 emittierte Licht wird teilweise direkt in das Objektiv 3.1 eingestrahlt, da der Ringspiegel 4 dies aufgrund seiner zentrischen Ausnehmung grundsätzlich zulässt. Darüber hinaus werden Teile des reflektierten Lichts, insbesondere ausgehend von den Randbereichen des Werkstücks 2, die in eine Richtung koaxial bzw. parallel zu einer Mittelachse 4.1 emittiert werden, über die Reflexionsfläche 4.2 ebenfalls zur Kamera 3 hin abgelenkt. Ein auf diese Weise generierter erster Strahlengang 5.1 weist aufgrund der runden Ausbildung des Ringspiegels 4 einerseits sowie des Werkstücks 2 andererseits in seiner Gesamtheit eine zylinderförmige Grundform mit einem Durchmesser Dₛ auf, die koaxial zur Mittelachse 4.1 ausgerichtet ist. Dieser erste Strahlengang 5.1 wird dann trichterförmig über die Reflexionsfläche 4.2 zur Kamera 3 bzw. zum Objektiv 3.1 hin abgelenkt. Der Maximaldurchmesser Dₘₐₓ des Ringspiegels 4 bzw. der Reflexionsfläche 4.2 ist etwas größer als die maximale Breite bzw. der maximale Durchmesser des Werkstücks B_{w}, so dass mit Rücksicht auf die möglichen Toleranzen beim Platzieren des Werkstücks 2 vor der Kamera 3 die gewünschte Messung bzw. Erfassung erfolgen kann. In einem weiteren nicht dargestellten Ausführungsbeispiel der erfindungsgemäßen Prüfeinrichtung wird ein Weitwinkel- oder Weitwinkel-Nadelöhrobjektiv 3 in Verbindung mit einem Ringspiegel 6 verwendet, wobei zumindest der Durchmesser Dₘₐₓ sowie der Reflexionswinkel α₂ bzw. der Reflexionsflächenwinkel des Ringspiegels 6 derart ausgebildet ist, dass die Blickrichtung der Kamera 3 über den Ringspiegel 6 seitlich auf die äußere Mantelfläche des Hohlkörpers 2 ausgerichtet ist. Den ergänzenden Einsatz eines solchen Ringspiegels 6 zeigt Figur 3.

Figur 3 zeigt ein weiteres Ausführungsprinzip mit einem zweiten Hohl- bzw. Ringspiegel 6, der unterhalb des ersten Hohl- bzw. Ringspiegels 4 angeordnet ist. Der zweite Ringspiegel 6 weist einen Reflexionswinkel α₂ auf, der kleiner ist als der Reflexionswinkel α₁ des ersten Ringspiegels 4, so dass der äußere Randbereich des Werkstücks 2 erfassbar ist.

Gemäß Figur 2 handelt es sich um ein telezentrisches Objektiv 3.1 mit einer telezentrischen Linse und einem Gehäuse 3.2. Der Hohl- bzw. Ringspiegel 4 ist ebenfalls vor dem Objektiv 3.1 innerhalb des Gehäuses 3.2 angeordnet, so dass dieser zwischen dem Werkstück 2 und dem Objektiv 3.1 vorgesehen ist. Er weist einen Reflexionsflächenwinkel bzw. Reflexionswinkel β₁ auf. Der Durchmesser des Objektivs Dₒ ist dabei größer als der Mindestdurchmesser Dₘᵢₙ der Reflexionsfläche 4.2, so dass das von der Reflexionsfläche 4.2 in koaxialer Richtung reflektierte Licht das Objektiv 3.1 erreicht. Der Mindestdurchmesser Dₘᵢₙ des Ringspiegels 4 ist dabei etwas größer als die Breite bzw. der Durchmesser des Werkstücks B_{w}, so dass das vom Werkstück 2 in axialer Richtung emittierte Licht das Objektiv 3.1 direkt erreicht.

Ein vom Ringspiegel bzw. Reflektor 4 bzw. von der Reflexionsfläche 4.2 koaxial zur Mittelachse reflektierter Strahlengang 5.2 weist dabei im Gesamten ebenfalls eine zylinderförmige Grundform auf, da sowohl der Ringspiegel 4 als auch das Werkstück 2 rund sind.

In einem weiteren, nicht dargestellten Ausführungsbeispiel der erfindungsgemäßen Prüfeinrichtung 1 wird ein telezentrisches Objektiv 3.1 in Verbindung mit einem Ringspiegel 6 verwendet, wobei zumindest der Durchmesser Dₘᵢₙ sowie der Reflexionswinkel β₂ bzw. der Reflexionsflächenwinkel des Ringspiegels 6 derart ausgebildet sind, dass die Blickrichtung der Kamera 3 über den Ringspiegel 6 seitlich auf die äußere Mantelfläche des Hohlkörpers 2 ausgerichtet ist. Den ergänzenden Einsatz eines solchen Ringspiegels 6 zeigt Figur 4.

Figur 4 zeigt ein weiteres Ausführungsprinzip mit einem zweiten Hohl- bzw. Ringspiegel 6, der unterhalb des ersten Hohl- bzw. Ringspiegels 4 angeordnet ist. Der zweite Ringspiegel 6 weist einen Reflexionswinkel β₂ auf, der kleiner ist als der Reflexionswinkel β₁ des ersten Ringspiegels 4, so dass der äußere Randbereich des Werkstücks 2 erfassbar ist.

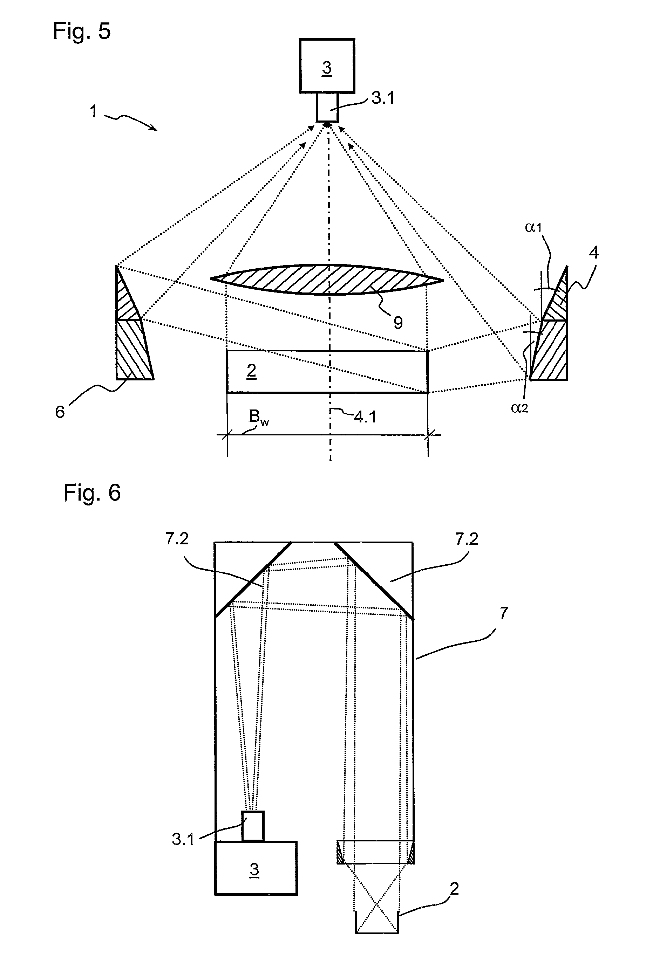

Die Prüfeinrichtung 1 gemäß Figur 5 weist ein Weitwinkelobjektiv 3.1 gemäß den Figuren 1 und 3 auf. Im Strahlengang vor dem Objektiv 3.1 ist eine Sammellinse 9 vorgesehen, deren Durchmesser D_{L} größer ist als die Breite B_{w} des Werkstücks 2. Über die Sammellinse 9 erfolgt die Erfassung des Strahlengangs vom Werkstück 2 in eine Richtung lotrecht zu einer nicht dargestellten Aufstandsfläche des Werkstücks 2. Daneben ist ein erster und ein zweiter Ringspiegel 4, 6 mit unterschiedlichen Reflektionswinkeln α1, α2 vorgesehen. Der jeweilige Innendurchmesser der Ringspiegel ist dabei größer als der der Streulinse 9 bzw. der Breite B_{W} des Werkstücks 2. Über den ersten Ringspiegel 4 ist der innere Wandbereich bzw. die innere Mantelfläche 2.3 und der Rand 2.1 des Werkstücks 2 erfassbar. Über den zweiten Ringspiegel 6 ist ein äußerer Randbereich 2.5 des Werkstücks 2 erfassbar. Somit werden drei verschiedene Ansichten unter Einsatz eines Weitwinkelobjektivs bereitgestellt. In allen Ausführungsbeispielen reflektiert der jeweilige Der Ringspiegel das vom Werkstück ausgehende Licht unmittelbar zum Objektiv bzw. zur Linse. Eine weitere Umlenkung ist nicht notwendig.

Figur 6 zeigt ein Umlenkgehäuse 7 mit zwei Umlenkspiegeln 7.1, 7.2. In dem erfindungsgemäßen Ausführungsbeispiel wird der optische Weg des Strahlengangs eines normalen Objektivs 3.1 mit kleinem Öffnungswinkel über die zweifache Umlenkung verlängert, so dass ein der Brennweite entsprechender Abstand zum Werkstück 2 vorhanden ist.

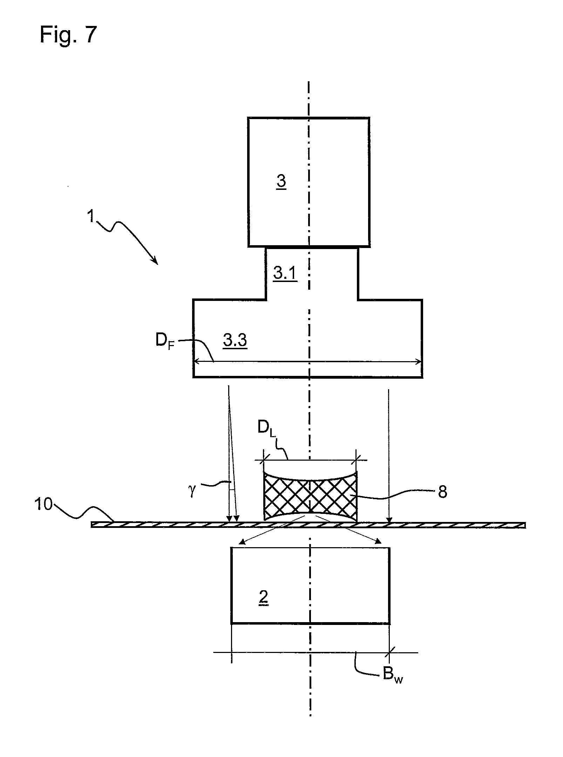

Die Prinzipdarstellung gemäß Figur 7 zeigt die Kamera 3 mit Objektiv 3.1 sowie eine Frontlinse 3.3 mit einem Durchmesser D_{F} im Strahlengang vor dem Objektiv 3.1. Im Strahlengang vor der Frontlinse 3.3 ist eine Streulinse 8 mit einem Durchmesser D_{L} vorgesehen. Die Streulinse 8 befindet sich dabei auf einer durchsichtigen Glasplatte 10 oberhalb des zu prüfenden Werkstücks 2, so dass in der Fischaugencharakteristik begründete flache Sichtwinkel der Streulinse 8 über den Rand nach Außen genutzt werden kann. Somit können Ausbrüche des Randes gegen den Hintergrund sehr gut abgebildet werden. Die so gebildete Prüfeinrichtung 1 dient der Erfassung eines als Becher oder Kappe ausgebildeten Werkstücks 2 mit einer Stückbreite B_{w}. Das Werkstück 2 ist hier im Prinzip als geschnittener Becher bzw. Deckel dargestellt, wobei es sich auch grundsätzlich um einen Teilbereich eines größeren Werkstücks handeln kann, der geprüft wird. Die Werkstückbreite B_{w} bezieht sich in diesem Fall auf den zu prüfenden Teilausschnitt eines größeren Werkstücks.

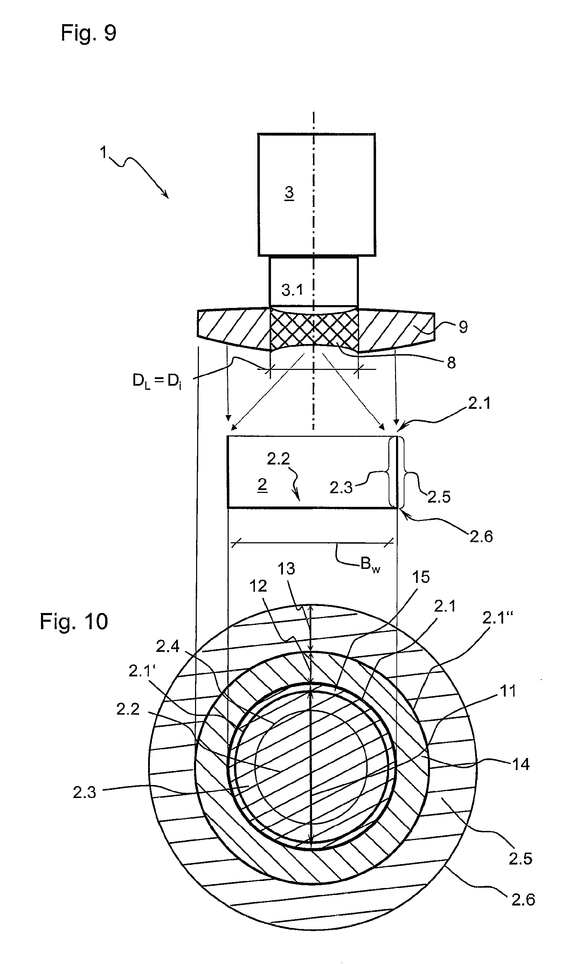

Der Durchmesser D_{F} der Frontlinse 3.3 ist dabei größer als die Werkstückbreite B_{w}. Somit lässt sich ein Rand 2.1 des Werkstücks 2 von oben erfassen. Der Durchmesser D_{L} der Streulinse 8 ist kleiner als der Durchmesser D_{F} der Frontlinse 3.3. Der Durchmesser D_{L} der Streulinse 8 ist auch kleiner als die Werkstückbreite B_{w}. Über die Frontlinse 3.3 wird zumindest ein äußerer Bereich um den Rand 2.1 des Werkstücks 2 unmittelbar erfasst. Über die Streulinse 8 wird das ganze Werkstück 2, vorzugsweise ein mittlerer Bereich des Werkstücks 2 bzw. ein Boden 2.2, ein innerer Wandbereich 2.3 und der Rand 2.1 sowie ein Bodenrand 2.4 gemäß Figur 10 erfasst.

Die Frontlinse 3.3 weist dabei einen Öffnungswinkel γ von ca. 5° auf. Über die Streulinse 8 erfolgt entsprechend der optischen Eigenschaften der Streulinse 8 eine Aufweitung des Strahlengangs, wie dargestellt.

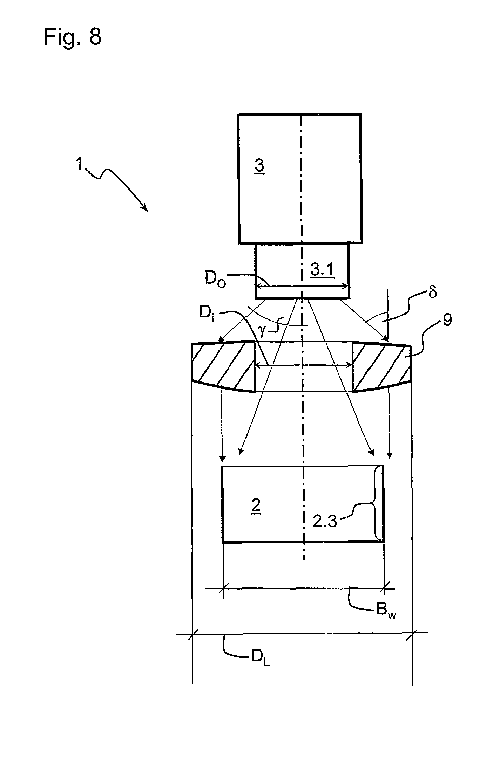

In der Darstellung gemäß Figur 8 ist keine Frontlinse 3.3 vorgesehen. Je nach verwendetem Objektiv 3.1 ist der Einsatz einer separaten Frontlinse 3.3 erforderlich. Im Strahlengang nach dem Objektiv 3.1 ist eine ringförmige Sammellinse 9 mit einem Innendurchmesser Dᵢ angeordnet. Während das Objektiv gemäß Figur 7 als telezentrisches bzw. endozentrisches Objektiv ausgebildet ist, handelt es sich bei dem Objektiv gemäß Figur 8 um ein weitwinkliges Objektiv mit einem Öffnungswinkel γ von etwa 60°. Durch dieses Objektiv 3.1 wird mit Rücksicht auf die ringförmige Ausbildung der Sammellinse 9 die weitwinklige Erfassung, also des Bodens 2.2 mit Rand 2.1 und des inneren Wandbereichs 2.3 des Werkstücks 2, durch die Öffnung der Sammellinse 9 in der Direktansicht gewährleistet. Über die Sammellinse 9, die im Wesentlichen oberhalb des Randes 2.1 des Werkstücks 2 angeordnet ist, wird der Rand 2.1 bzw. der sich daran anschließende innere und äußere Bereich aus vertikaler Richtung erfasst. Die Sammellinse 9 weist dabei einen Ablenkwinkel δ auf, der die Erfassung des vom Randbereich ausgehenden Strahlengangs über das Objektiv gewährleistet.

Gemäß Ausführungsbeispiel Figur 9 sind die Sammellinse 9 sowie die Streulinse 8 kombiniert und beide nach der Frontlinse 3.3 angeordnet. Der mittlere Bereich des Strahlengangs wird dabei über die Streulinse 8 aufgeweitet, während der Strahlengang im äußeren Ringbereich der Frontlinse 3.3 über die Sammellinse 9 in vertikale Richtung abgelenkt wird. Der Innendurchmesser Dᵢ der Sammellinse 9 entspricht dabei etwa dem Durchmesser D_{L} der Streulinse 8.

Figur 10 stellt das so erfasste Bild im Prinzip dar. Über die Streulinse 8 wird der innere Bildbereich, gekennzeichnet durch die Schraffur und mit Pfeil 11, erfasst, während über die Sammellinse 9 der mittlere Bildbereich, gekennzeichnet durch Schraffur und Pfeil 12, in der Draufsicht erfasst wird. Im inneren Bildbereich 11 ist der Rand 2.1' des Werkstücks 2 bzw. der Kappe etwas verkleinert zu sehen. Neben dem Bildbereich 2.3, der den inneren Wandbereich darstellt, werden der Bodenrand 2.4 sowie der Boden 2.2 erfasst. Der innere Wandbereich 2.3 inklusive der Rand 2.1' und eine anschließende Bildzone 15 werden aufgrund der mit der Streulinse 8 erreichten Weitwinkligkeit erfasst.

Im mittleren Bildbereich 12 ist der Rand 2.1 des Werkstücks 2 in realer Größe abgebildet. An diesen Rand anschließend erstreckt sich das äußere Umfeld einer Aufstandsfläche 14 des Werkstücks 2.

An den mittleren Bildbereich 12 schließt ein äußerer Bildbereich 13, wie er gemäß Figur 3, 4, oder 5 von dem zweiten Ringspiegel generiert wird. Er beginnt von innen ausgehend mit dem Rand 2.1" in vergrößerter Darstellung, zeigt den äußeren Wandbereich 2.5 und schließt nach außen mit dem unteren äußeren Bodenrand 2.6 ab.

### Bezugszeichenliste

- 1: Prüfeinrichtung
- 2: Werkstück
- 2.1: Rand
- 2.1': Rand
- 2.2: Boden
- 2.3: innerer Wandbereich, innere Mantelfläche
- 2.4: Bodenrand
- 2.5: äußerer Wandbereich
- 2.6: unteren äußeren Bodenrand
- 3: Kamera
- 3.1: Objektiv
- 3.2: Gehäuse
- 3.3: Frontlinse
- 4: Ringspiegel, Umlenkspiegel, Reflektor
- 4.1: Mittelachse
- 4.2: Reflexionsfläche
- 5.1: Strahlengang
- 5.2: Strahlengang
- 6: Ringspiegel, zweiter Ringspiegel
- 7: Gehäuse
- 7.1: erster Umlenkspiegel
- 7.2: zweiter Umlenkspiegel
- 8: Streulinse
- 9: Sammellinse
- 10: Platte
- 11: innerer Bildbereich
- 12: äußerer Bildbereich
- 14: Aufstandsfläche
- 15: anschließende Bildzone
- B_{w}: Werkstückbreite
- Dₘᵢₙ: minimaler Durchmesser
- Dₘₐₓ: maximaler Durchmesser
- D_{F}: Durchmesser
- D_{L}: Durchmesser Linse
- Dᵢ: Durchmesser
- Dₒ: Durchmesser
- Dₛ: Durchmesser
- Dᵥ: Durchmesser
- α₁: Reflexionsflächenwinkel, Reflexionswinkel
- α₂: Reflexionsflächenwinkel, Reflexionswinkel
- β₁: Reflexionsflächenwinkel, Reflexionswinkel
- β₂: Reflexionsflächenwinkel, Reflexionswinkel
- γ: Öffnungswinkel
- δ: Ablenkwinkel

## Patentansprüche

1. Prüfeinrichtung (1) für Werkstücke (2) mit mindestens einer ein Objektiv (3.1) aufweisenden Kamera (3) sowie mindestens einem mit Bezug zum Strahlengang vor dem Objektiv (3.1) angeordneten Umlenkspiegel (4), der das von einem vor dem Objektiv (3.1) platzierbaren Werkstück emittierte Licht in Richtung zur Kamera (3) reflektiert, wobei der Umlenkspiegel (4) als Ringspiegel mit einer koaxial zur optischen Achse des Objektivs (3.1) angeordneten Mittelachse (4.1) ausgebildet ist und eine kegelmantelförmige Reflexionsfläche (4.2) aufweist und neben dem vom Umlenkspiegel (4) reflektierten Bildanteil auch das von dem Werkstück emittierte Licht zumindest teilweise direkt von der Kamera (3) erfassbar ist,
**dadurch gekennzeichnet,**
**dass** der Ringspiegel (4) oder die Reflexionsfläche (4.2) einen minimalen Durchmesser Dₘᵢₙ und einen maximalen Durchmesser Dₘₐₓ aufweist, wobei Dₘᵢₙ maximal so groß ist wie die Werkstückbreite B_{w} und das Werkstück (2) koaxial zum Ringspiegel (4) platzierbar ist.

2. Prüfeinrichtung (1) für Werkstücke (2) mit mindestens einer ein Weitwinkel-Objektiv (3.1) aufweisenden Kamera (3) sowie mindestens einem mit Bezug zum Strahlengang vor dem Objektiv (3.1) angeordneten Umlenkspiegel (4), der das von einem vor dem Objektiv (3.1) platzierbaren Werkstück emittierte Licht in Richtung zur Kamera (3) reflektiert, wobei der Umlenkspiegel (4) als Ringspiegel mit einer koaxial zur optischen Achse des Objektivs (3.1) angeordneten Mittelachse (4.1) ausgebildet ist und eine kegelmantelförmige Reflexionsfläche (4.2) aufweist und neben dem vom Umlenkspiegel (4) reflektierten Bildanteil auch das von dem Werkstück emittierte Licht zumindest teilweise direkt von der Kamera (3) erfassbar ist,
**dadurch gekennzeichnet,**
**dass** im Strahlengang vor dem Objektiv (3.1) eine Sammellinse (9) mit einem Durchmesser D_{L} vorgesehen ist, wobei der Durchmesser D_{L} mindestens so groß ist wie die Werkstückbreite B_{w}, wobei der Neigungswinkel α1 des Ringspiegels (4) derart ausgebildet ist, dass über die Kamera (3) ein Rand 2.1 und/oder innerer Wandbereich 2.3 des als Hohlkörper ausgebildeten Werkstücks (2) erfassbar ist.

3. Vorrichtung nach Anspruch 1 oder 2,
**dadurch gekennzeichnet,**
**dass** die Reflexionsfläche (4.2) teilweise gekrümmt oder sphärisch ausgebildet ist.

4. Vorrichtung nach Anspruch 1, 2 oder 3,
**dadurch gekennzeichnet,**
**dass** das Objektiv (3.1) als Weitwinkel- oder als Weitwinkel-Nadelöhrobjektiv ausgebildet ist.

5. Vorrichtung nach Anspruch 1, 3 oder 4,
**dadurch gekennzeichnet,**
**dass** der Neigungswinkel α1 des Ringspiegels (4) derart ausgebildet ist, dass die Blickrichtung der Kamera (3) über den Ringspiegel (4) lotrecht auf den Randbereich des als Hohlkörper ausgebildeten Werkstücks (2) und an diesem streifend innen und außen vorbei ausrichtbar ist.

6. Vorrichtung nach einem der Ansprüche 1 oder 3,
**dadurch gekennzeichnet,**
**dass** das Objektiv (3.1) als telezentrisches Objektiv mit einem Durchmesser Dₒ ausgebildet ist, wobei der Durchmesser Dₒ größer ist als die Werkstückbreite B_{w} und der Durchmesser Dₒ des Objektivs (3.1) größer ist als der minimale Durchmesser Dₘᵢₙ des Ringspiegels (4).

7. Vorrichtung nach Anspruch 6,
**dadurch gekennzeichnet,**
**dass** der Neigungswinkel β1 des Ringspiegels (4) derart ausgebildet ist, dass über die Kamera (3) ein Rand 2.1 und/oder innerer Wandbereich 2.3 des als Hohlkörper ausgebildeten Werkstücks (2) erfassbar ist.

8. Vorrichtung nach einem der Ansprüche 1 bis 7,
**dadurch gekennzeichnet,**
**dass** ein zweiter Ringspiegel (6) mit einem Neigungswinkel α2, β2 vorgesehen ist, der im Strahlengang zwischen dem ersten Ringspiegel (4) und dem Werkstück (2) angeordnet ist.

9. Vorrichtung nach einem der Ansprüche 1 bis 8,
**dadurch gekennzeichnet,**
**dass** der Neigungswinkel α2, β2 des Ringspiegels (4) derart ausgebildet ist, dass die Blickrichtung der Kamera (3) über den zweiten Ringspiegel (6) seitlich auf die äußere Mantelfläche des Hohlkörpers (2) ausrichtbar ist.

10. Vorrichtung nach einem der Ansprüche 6 bis 9,
**dadurch gekennzeichnet ,**
**dass** das telezentrische Objektiv (3.1) ein Gehäuse (3.2) aufweist und der Ringspiegel (4, 6) zumindest teilweise innerhalb des Gehäuses (3.2) angeordnet ist.

11. Vorrichtung nach einem der der Ansprüche 6 bis 10,
**dadurch gekennzeichnet,**
**dass** die Kamera (3) ein Objektiv (3.1) mit großer Brennweite aufweist, wobei zwecks Anpassung des Abstands zwischen dem Objektiv (3.1) und dem Werkstück (2) der Strahlengang zwischen dem Objektiv (3.1) und dem Werkstück (2) über mindestens zwei Umlenkspiegel (7.1, 7.2) umgelenkt wird.

12. Vorrichtung nach einem der vorhergehenden Ansprüche ,
**dadurch gekennzeichnet,**
**dass** die Kamera (3) und/oder der Ringspiegel (4) in eine Richtung parallel zur Mittelachse verschiebbar ist.

13. Prüfeinrichtung (1) für Werkstücke (2) mit mindestens einer Kamera (3) und einem im Strahlengang vor der Kamera (3) angeordneten Objektiv (3.1) mit einer Frontlinse (3.3), die einen Durchmesser D_{F} aufweist, wobei im Strahlengang vor dem Objektiv (3.1) mindestens eine den Strahlengang aufweitende Streulinse (8) mit einem Außendurchmesser D_{L} konzentrisch zum Objektiv (3.1) angeordnet ist,
**dadurch gekennzeichnet,**
**dass** das Objektiv (3.1) als telezentrisches Objektiv ausgebildet ist und der Durchmesser D_{F} der Frontlinse (3.3) des telezentrischen Objektivs größer ist als eine zu erfassende Werkstückbreite B_{w} und der Durchmesser D_{L} der Streulinse (8) kleiner ist als der Durchmesser D_{F} der Frontlinse (3.3).

14. Prüfeinrichtung nach der Ansprüche 6 bis 13,
**dadurch gekennzeichnet,**
**dass** das Objektiv (3.1) als endozentrisches Objektiv mit einem Öffnungswinkel γ ausgebildet ist, wobei der Öffnungswinkel γ maximal 10° groß ist.

15. Prüfeinrichtung nach Anspruch 13 oder 14,
**dadurch gekennzeichnet,**
**dass** zwecks Lagerung der Streulinse (8) eine durchsichtige Platte (10) im Strahlengang zwischen der Streulinse (8) und dem Werkstück (2) vorgesehen ist, auf der die Streulinse (8) ablegbar ist.

16. Prüfeinrichtung (1) für Werkstücke (2) mit mindestens einer Kamera (3) und einem im Strahlengang vor der Kamera (3) angeordneten Objektiv (3.1) mit einem Durchmesser Dₒ, sowie einer im Strahlengang vor dem Objektiv (3.1) angeordneten ringförmigen Sammellinse (9) mit einem Ablenkwinkel δ, einem Innendurchmesser Dᵢ und einem Außendurchmesser D_{L},
**dadurch gekennzeichnet,**
**dass** das Objektiv (3.1) als weitwinkliges Objektiv (3.1) mit einem Öffnungswinkel γ von mindestens 30° bis 90°ausgebildet ist, wobei der Außendurchmesser D_{L} der Sammellinse (9) mindestens so groß ist wie die Werkstückbreite B_{w} und der Ablenkwinkel δ dem Öffnungswinkel γ entspricht.

17. Prüfeinrichtung nach Anspruch 16,
**dadurch gekennzeichnet,**
**dass** der Innendurchmesser Dᵢ kleiner ist als die zu erfassende Werkstückbreite B_{w}.

18. Prüfeinrichtung nach einem der Ansprüche 16 oder 17,
**dadurch gekennzeichnet,**
**dass** die Sammellinse (9) als Fresnellinse ausgebildet ist und aus Glas oder Kunststoff gebildet ist.
